# EUROPEAN PATENT APPLICATION

(11) **EP 4 391 108 A1**
(43) Date of publication of application: **26.06.2024**
(21) Application number: 22216077.2
(22) Date of filing: 22.12.2022
(51) Int. Cl.: H01M 4/134, H01M 4/38, H01M 10/052, H01M 10/0567, H01M 10/0568, H01M 10/0569

(54) **SOLID STATE ELECTROLYTE FOR ANODE-FREE METAL BATTERY CELL**

(71) Applicant: Belenos Clean Power Holding AG, 2502 Bienne (CH)
(72) Inventor: METTAN, Yoann, 1902 Evionnaz (CH)
(74) Representative: ICB SA

(57) **Abstract**

The present invention relates to a solid state electrolyte (SSE) for an anode-free metal battery cell, wherein the metal is an alkali metal, an alkaline earth metal or a metal of Group Ib, Group IIb, or Group Illa of the periodic table, the SSE comprising a non-aqueous solvent, a metal salt of the alkali metal, the alkaline earth metal or the metal of Group Ib, Group IIb, or Group IIIa of the periodic table, an aluminium-based halogenated compound AlXₙ, wherein X is a halogen atom and n is between 1 and 6, and a bis(fluorosulfonyl)imide anion. The invention further relates to a method of producing such a SSE comprising preparing a liquid precursor and exposing the liquid precursor to a temperature between 20 °C and 80 °C to solidify the liquid precursor, thereby obtaining the solid state electrolyte.

## Description

### Technical field of the invention

The present invention relates to a solid state electrolyte for an anode-free metal battery cell. The invention further relates to methods of producing a solid state electrolyte for an anode-free metal battery cell.

### Background

Recently, the development and improvement of batteries for various devices requiring batteries, such as mobile phones, wireless household appliances and electric vehicles and bikes, has become an important field of research and interest. In particular the field of secondary batteries is advancing, by the development of smaller and lighter batteries, having an improved lifetime.

In accordance with these recent development, a lithium secondary battery with lithium metal as active material has attracted attention. Lithium metal is known to have the characteristics of a low redox potential (-3.045 V vs. standard hydrogen electrode) as well as a high weight energy density (3860 mAh/g), which makes lithium metal an interesting material for the negative electrode (anode).

It is known to use lithium metal as a negative electrode by attaching a lithium foil to the anode current collector. However, as lithium is an alkali metal, it reacts with water and oxygen because of its high reactivity. This has the disadvantage that such batteries are considered unsafe, because of the risk of its explosion upon, for example, a leak to the environment. The handling of lithium foils is further also dangerous.

Further, upon exposure of lithium metal to the atmosphere, an oxide layer is typically formed as a result of oxidation. Such an oxide layer tends to act as an insulator, thereby increasing the electric resistance and thus reducing the performance of the battery.

In other to solve this issue, anode-free battery cells have been developed. Such battery cells comprise typically only an anode current collector, and a metallic (e.g. lithium) layer as anode is formed (deposited) in situ on the anode current collector during charging of the battery, and is consumed during discharging of the battery.

US2016/0261000 discloses an anode-free rechargeable battery comprising an anode current collector, a separator and a cathode. The battery further comprises a liquid electrolyte including a salt or salt mixture containing an active metallic cation (e.g. lithium ion) dissolved in a non-aqueous solvent, solvent mixture or a polymer. The separator can be infused with the electrolyte. During charging of the battery, the anode is formed in situ on the surface of the anode current collector.

A disadvantage of the above-described electrolyte is that the electrolyte is liquid, which may lead to leakage of the electrolyte from the battery, resulting in loss of functionality. Another disadvantage is that the metallic (e.g. lithium) ions may interact with the solvent, thereby reducing the amount of ions available for deposition as anode layer in situ.

US2020/0203757 discloses a lithium secondary battery comprising a positive electrode, a negative electrode current collector, and a separator and an electrolyte interposed between the electrodes. The electrolyte is a gel polymer electrolyte and can be cross-linked. The gel polymer electrolyte comprises a polymer matrix, and a lithium salt dissolvent in an organic solvent. A lithium metal layer is formed in situ on the negative electrode current collector during charging.

A disadvantage of the gel polymer electrolyte is that the lithium ion conductivity thereof is known to be low, such as typically less than 1 mS/cm.

### Summary of the invention

It is an aim of the present invention to overcome one or more of the foregoing drawbacks. It is an aim of the present invention to provide an improved solid state electrolyte for an anode-free metal battery cell. It is an aim of the invention to provide a more stable solid state electrolyte, in particular chemically, physically and electrochemically.

It is an aim to provide a solid state electrolyte which allows, when in a battery cell that is in use, to reduce or minimize interaction between the electrolyte and the metal ions.

It is a further aim of the invention to provide a solid state electrolyte for an anode-free battery cell which, compared to the electrolytes for anode-free battery cells of the art, improves the performance of the battery cell and/or increases the life-time of the battery cell.

It is also an aim of the present invention to provide a method of producing an improved solid state electrolyte for an anode-free battery cell, wherein the method comprises a limited number of processing steps.

According to a first aspect of the invention, there is provided a solid state electrolyte (SSE) for an anode-free metal battery cell as set out in the appended claims.

The metal of the anode-free metal battery cell is an alkali metal, an alkaline earth metal or a metal of Group Ib, Group IIb, or Group IIIa of the periodic table. Advantageously, the metal is lithium, sodium, magnesium, aluminium, zinc or silver.

The solid state electrolyte comprises a non-aqueous solvent. In other words, the SSE comprises at least one, such as two or more, non-aqueous solvents.

The solid state electrolyte further comprises a metal salt. In other words, the SSE comprises at least one, such as two or more, metal salts. The metal salt is a metal salt of an alkali metal, an alkaline earth metal or a metal of Group Ib, Group IIb, or Group IIIa of the periodic table.

Advantageously, the metal of the metal salt is lithium, sodium, magnesium, aluminium, zinc or silver. In other words, the metal salt advantageously is a lithium salt, a sodium salt, a magnesium salt, an aluminium salt, a zinc salt, or a silver salt.

When the SSE comprises two or more metal salts, the metal thereof can be the same or different. For example, without being limited thereto, the SSE can comprise two lithium salts, or a combination of a lithium salt and a magnesium salt.

Advantageously, and as is known, the metal salt comprises an anion. As is known, a metal salt advantageously also comprises a cation. Advantageously, the cation is a cation of the metal of the metal salt. For example, when the metal salt is a lithium salt, the cation is a lithium cation (Li⁺).

The solid state electrolyte further comprises an aluminium-based halogenated compound AlXₙ and/or a polymeric form thereof, wherein X is a halogen atom. Advantageously, n is between 1 and 6, for example between 1 and 3. Advantageously, X is chloride, bromide or iodide, preferably chloride. Advantageously, the polymeric form of AlXₙ is (AlXₙ)ₘ, wherein m is equal to or higher than 2.

Advantageously, X is chloride and n is 3, and the aluminium-based halogenated compound is AlCl₃. Advantageously, X is chloride, n is 3 and m is equal to or higher than 2, and the polymeric form of the aluminium-based halogenated compound is (AlCl₃)ₘ.

The inventors have surprisingly discovered that the presence of the aluminium-based halogenated compound AlXₙ and/or a polymeric form thereof in the solid state electrolyte is capable of protecting the non-aqueous solvent. In particular, and in use in an anode-free metal battery cell, the aluminium-based halogenated compound AlXₙ and any polymeric form thereof, whichever is present, reduces, and even minimizes, any interaction between the non-aqueous solvent of the SSE and the metal ions moving through the SSE upon charging and discharging of the battery cell. Consequently, the presence of the aluminium-based halogenated compound AlXₙ and/or a polymeric form thereof in the SSE advantageously allows to maintain the functionality of the SSE. Its presence also advantageously reduces the loss of metal ions in the anode-free battery cell, thereby enhancing the performance and life-time of the anode-free battery cell.

The solid state electrolyte further comprises a bis(fluorosulfonyl)imide (FSI) anion. The inventors have surprisingly discovered that the presence of an FSI anion in the SSE allows to maintain the solid state nature of the electrolyte comprising an aluminium-based halogenated compound AlXₙ and/or a polymeric form thereof.

In other words, it was noticed that without FSI anion present, no substantial solid state nature of the electrolyte can be realized, i.e. the electrolyte remains a liquid electrolyte. Without wishing to be bound by any theory, the inventors believe that the presence of an FSI anion allows to establish a strong interaction between the fluoride atom of the FSI anion and the aluminium atom of the aluminium-based halogenated compound AlXₙ or any polymeric form thereof, whichever is present in the SSE. This strong interaction advantageously provides a network of one or more FSI anions in a solid state matrix of AlXₙ and/or a polymeric form thereof. It is believed by the inventors that the presence of one or more FSI anions in the network provides a higher transference number to the electrolyte by anchoring the FSI anion in the solid state matrix of AlXₙ and/or a polymeric form thereof, thereby contributing to an overall increased efficiency of the battery cell in which the solid state electrolyte of the invention is used, as compared to conventional SSEs.

Advantageously, the molar ratio of the metal salt and the aluminium-based halogenated compound and/or a polymeric form thereof in the solid state electrolyte is between 1:2 and 50:1, preferably between 1:1 and 30:1, such as between 2:1 and 20:1, more preferably between 3:1 and 10:1.

Advantageously, the molar ratio of the FSI anion and the aluminium-based halogenated compound and/or a polymeric form thereof in the solid state electrolyte is between 1:2 and 50:1, preferably between 1:1 and 30:1, such as between 2:1 and 20:1, more preferably between 3:1 and 10:1

According to a first embodiment of the solid state electrolyte of the present disclosure, the anion of the metal salt is FSI. For example, when the metal of the metal salt is lithium (Li), the metal salt advantageously is LiFSI.

Optionally, according to the first embodiment, the SSE can comprise at least one further metal salt, for example a second, third, or fourth metal salt. Any further metal salts also comprise, as is known, a cation and an anion. Advantageously, the anion of the at least one further metal salt is FSI, bis(trifluoromethane)sulfonimide (TFSI), dicyanamide (DCA), perchlorate (ClO₄), tetracholoroaluminate (AlCl₄), difluorobis(oxalato) borate (DFOB), or hexafluorophosphate (PF₆).

For example, the SSE can comprise two metal salts having a different cation and both having FSI as anion, for example LiFSI and NaFSI. For example, the SSE can comprise three metal salts, at least one having FSI as anion. Advantageously, when the SSE comprises three metal salts, one thereof comprising FSI as anion, the other two metal salts have the same or a different cation and/or the same or a different anion, such as LiFSI as the first, FSI-comprising metal salt, and LiTFSI and LiPF₆ as the second and third metal salt, respectively.

Advantageously, when the anion of the metal salt or of at least one of the two or more metal salts, is FSI, the non-aqueous solvent(s) is (are) selected from the group consisting of nitrile, ether, ester, carbonate, sulfone, amide, and ionic liquids. Preferred examples, without being limited thereto, of the non-aqueous solvent(s) include acetonitrile, dimethoxyethane and ionic liquids.

Ionic liquids are known in the field as being salts in liquid form at moderate temperature, without the need for the salt to be dissolved in another solvent. Ionic liquids typically are composed of ions - cations and anions. Advantageously, when the non-aqueous solvent is an ionic liquid, it comprises an organic cation and an inorganic or organic anion.

According to a second embodiment of the solid state electrolyte of the present disclosure, the non-aqueous solvent is an ionic liquid, wherein the anion of the ionic liquid is FSI.

Optionally, according to the first embodiment, the SSE can comprise at least one further non-aqueous solvent. Advantageously, the at least one further non-aqueous solvent is selected from the group consisting of nitrile, ether, ester, carbonate, sulfone, amide, and ionic liquids. Preferred examples of the at least one further non-aqueous solvent include acetonitrile, dimethoxyethane and ionic liquids.

When one of the second or further non-aqueous solvents is an ionic liquid, the anion thereof advantageously is FSI, TFSI, DCA, AlCl₄, ClO₄, DFOB, or PF₆. For example, the SSE can comprise two ionic liquids as non-aqueous solvents, each having as anion FSI and having a different cation. Alternatively, each ionic liquid can have a different anion, one of them being FSI, and the same cation. In other words, the anion of the second or further ionic liquids as non-aqueous solvent may be other than FSI.

Advantageously, when the non-aqueous solvent or at least one of the two or more non-aqueous solvents is an ionic liquid having a FSI anion, the anion of the metal salt(s) of the SSE is TFSI, DCA, DFOB, ClO₄, AlCl₄, or PF₆.

A third embodiment of the solid state electrolyte of the present disclosure comprises a combination of the first and the second embodiment. In other words, according to the third embodiment, the anion of the metal salt or of at least one of the two or more metal salts, is FSI and the non-aqueous solvent, or at least one of the two or more non-aqueous solvents, is an ionic liquid, the anion thereof being FSI.

According to a second aspect of the invention, there is provided a method of producing a solid state electrolyte (SSE) for an anode-free metal battery cell as set out in the appended claims.

The metal of the anode-free metal battery cell is an alkali metal, an alkaline earth metal or a metal of Group Ib, Group IIb, or Group IIIa of the periodic table. Advantageously, the metal is lithium, sodium, magnesium, aluminium, zinc or silver.

The method comprises preparing a liquid precursor, and solidifying the liquid precursor. The liquid precursor is obtained, or prepared, by adding an aluminium-based halogenated compound AlXₙ and a metal salt to a non-aqueous solvent.

The aluminium-based halogenated compound AlXₙ is advantageously as described hereinabove. Advantageously, n is between 1 and 6, for example between 1 and 3. Advantageously, X is chloride, bromide or iodide, preferably chloride.

Advantageously, X is chloride and n is 3, and the aluminium-based halogenated compound is AlCl₃. Alternatively or additionally, the aluminium-based halogenated compound can be M_{y}AlXₙ, wherein X is a halogen atom, n is between 1 and 6, M is a metal cation and y is at least 1. Advantageously, the metal cation is a cation of an alkali metal, an alkaline earth metal or a metal of Group Ib, Group IIb, or Group IIIa of the periodic table. In particular, the metal cation is a lithium cation, a sodium cation, or a magnesium cation. For example, when the metal cation is sodium, and y is 3, X is F and n is 6, the aluminium-based halogenated compound is Na₃AlF₆.

The metal salt is advantageously as described hereinabove. Advantageously, the metal salt is a metal salt of the alkali metal, the alkaline earth metal or the metal of Group Ib, Group IIb, or Group IIIa of the periodic table.

The non-aqueous solvent is advantageously as described hereinabove. For example, the non-aqueous solvent can be an ionic liquid. Advantageously, suitable ionic liquids are as described hereinabove.

The liquid precursor further comprises a bis(fluorosulfonyl)imide (FSI) anion. Advantageously, the FSI anion in the liquid precursor is provided by, or present via, the metal salt (or at least one of the two or more metal salts) as the anion thereof, and/or the non-aqueous solvent (or at least one of the two or more non-aqueous solvents) being an ionic liquid having an FSI anion.

Advantageously, the aluminium-based halogenated compound AlXₙ and/or the metal salt are at least partially dissolved in the non-aqueous solvent.

Advantageously, the concentration of the metal salt in the liquid precursor is between 0.5 and 6 M.

The liquid precursor is solidified by exposure to an elevated temperature. Advantageously, the temperature is between 20 °C and 120 °C, preferably between 20 °C and 100 °C, more preferably between 20 °C and 80 °C. Upon exposing the liquid precursor to such temperatures, a solid state electrolyte is obtained. Advantageously, the liquid precursor is exposed to a temperature is between 20 °C and 120 °C for a sufficient period of time (i.e. duration) to allow the liquid precursor to solidify.

Advantageously, upon exposing the liquid precursor to a temperature is between 20 °C and 120 °C, the aluminium-based halogenated compound AlXₙ solidifies, so that the obtained SSE comprises the aluminium-based halogenated compound AlXₙ and/or a polymeric form thereof. The polymeric form of the aluminium-based halogenated compound AlXₙ is advantageously as described hereinabove.

According to a third aspect of the invention, there is provided the use of a solid state electrolyte (SSE) according to the first aspect for the in situ deposition of a layer of the metal in an anode-free metal battery cell.

An advantage of the present invention include, without being limited thereto, is that the solid state electrolyte allows the deposition of a metallic layer in an anode-free metal battery cell, thereby reducing the loss of metal ions due to interaction with the solvent of the electrolyte. In other words, the SSE advantageously is substantially chemically and electrochemically stable, thereby enhancing the lifetime of the battery cell in which the SSE is used.

An advantage of the methods of producing a SSE of the invention is that the method is has a limited number of processing steps. A further advantage is that the methods do not require very high temperatures or elevated or reduced pressures, but can be performed in moderate or mild processing conditions.

### Description of the figures

Aspects of the invention will now be described in more detail with reference to the appended drawings, wherein same reference numerals illustrate same features and wherein:
- Figure 1 represents the Raman spectrum of a solid state electrolyte according to the invention;
- Figure 2 represents the Raman spectrum of another solid state electrolyte according to the invention;
- Figure 3 represents the Raman spectrum of a further solid state electrolyte according to the invention;
- Figure 4 represents the voltage (V) of an electrochemical cell with Cu foil and Li foil as individual electrodes and SSE of the invention as a function of the cell capacity on the Cu foil and the subsequent dissolutions of the deposited lithium;
- Figure 5 represents the voltage (V) of electrochemical cells with Cu foil and Li foil as individual electrodes and with SSE of the invention and with reference liquid electrolyte, respectively, as a function of the cell capacity for the lithium dissolution after the first lithium deposition; and
- Figure 6 represents the voltage of a battery cell with a SSE of the invention in function of the specific charge per gram of active material.

### Detailed description of the invention

As explained above, the solid state electrolyte (SSE) of the present disclosure comprises at least one metal salt, and at least one non-aqueous solvent.

The SSE also comprises an aluminium-based halogenated compound AlXₙ and/or a polymeric form thereof, wherein X is a halogen atom and n is between 1 and 6.

Alternatively or additionally, the aluminium-based halogenated compound can be M_{y}AlXₙ, wherein X is a halogen atom, n is between 1 and 6, M is a metal cation and y is at least 1. Advantageously, the metal cation is a cation of an alkali metal, an alkaline earth metal or a metal of Group Ib, Group IIb, or Group IIIa of the periodic table. In particular, the metal cation is a lithium cation, a sodium cation, or a magnesium cation. For example, when the metal cation is sodium, and y is 3, X is F and n is 6, the aluminium-based halogenated compound is Na₃AlF₆.

The solid state electrolyte further comprises at least one bis(fluorosulfonyl)imide (FSI) anion.

Advantageously, and according to a first embodiment, the source of FSI anions in the solid state electrolyte is a metal salt.

Advantageously, when the SSE comprises one metal salt, the metal salt has as anion a FSI anion. The metal salt having a FSI anion is advantageously as described hereinabove for the first embodiment.

Advantageously, when the SSE comprises two or more metal salts, at least one of the plurality of metal salts has FSI as anion. Advantageously, the anion of the other metal salts, i.e. the metal salts not having a FSI anion, can be anions known in the field. Non-limiting examples include bis(trifluoromethane)sulfonimide (TFSI or (SO₂CF₃)₂N), dicyanamide (DCA), perchlorate (ClO₄), hexafluorophosphate (PF₆), difluorobis(oxalato) phosphate (DFBOP), difluorobis(oxalato) borate (DFOB), tetrafluoroborate (BF₄), hexafluoroarsenic (AsF₆), tetrachloroaluminate (AlCl₄), (fluoromethylsulfonyl)(trifluoromethylsulfonyl)imide (FTFSI), and trifluoromethanesulfonate (CF₃SO₃).

Advantageously, the cation of the metal salt is an ion of an alkali metal, an alkaline earth metal or a metal of Group Ib, Group IIb, or Group IIIa of the periodic table. Advantageously, the alkali metal is lithium (Li), sodium (Na) or potassium (K). Advantageously, the alkaline earth metal is beryllium (Be), magnesium (Mg), or calcium (Ca). Advantageously, the Group Ib metal is silver (Ag) or gold (Au). Advantageously, the Group IIb metal is zinc (Zn) or cadmium (Cd). Advantageously, the Group IIIa metal is aluminium (Al).

Preferred examples of metal salts having FSI as anion are LiFSI, NaFSI, KFSI, Mg(FSI)₂ and Al(FSI)₃, in particular LiFSI.

Still according to the first embodiment, when the SSE comprises two or more metal salts, they can have the same or a different cation and/or the same or a different anion, wherein at least one metal salt has FSI as anion. For example, when the SSE comprises two metal salts, they can have a different cation and the same anion, for example LiFSI and NaFSI. For example, when the SSE comprises two metal salts, they can have the same cation and a different anion, one of them being FSI, for example LiFSI and LiTFSI.

The SSE comprises one or more non-aqueous solvents. The non-aqueous solvent(s) is (are) advantageously as described hereinabove. Non-limiting examples of suitable solvents include acetonitrile, dimethoxyethane (also known as 1,2-dimethoxyethane), propylene carbonate, ethylene carbonate, tetrahydrofuran, diethyl carbonate, γ-butyrolactone, 2-methyltetrahydrofuran, 1-3 dioxolane, tetramethyl sulfone (sulfolane), dimethylsulfone (DMSO₂), and ionic liquids. Advantageously, the ionic liquids suitable as non-aqueous solvent are as described hereinabove.

Non-limiting examples of cations of ionic liquids suitable as non-aqueous solvent according to the first embodiment are 1-butyl-1-methylpyrrolidinium, N-butyl-N-methylpyrrolidinium, 1-propyl-1-methylpyrrolidinium, N-propyl-N- N-methylpyrrolidinium, and 1-ethyl-1-methylpyrrolidinium.

Advantageously, according to the first embodiment, the ionic liquid(s) does (do) not have FSI as anion. Non-limiting examples of suitable anions include TFSI, DCA, ClO₄, PF₆, DFBOP, DFOB, BF₄, FTFSI), AlCl₄, AsF₆, and CF₃SO₃.

According to a second embodiment, the source of FSI anions in the solid state electrolyte is a non-aqueous solvent. Advantageously, the non-aqueous solvent comprising FSI anions is an ionic liquid.

Advantageously, when the SSE comprises one non-aqueous solvent, the non-aqueous solvent is an ionic liquid having as anion a FSI anion. The ionic liquid having a FSI anion is advantageously as described hereinabove in the summary section for the second embodiment.

Advantageously, when the SSE comprises two or more non-aqueous solvents, at least one of the plurality of non-aqueous solvents is an ionic liquid having an FSI anion.

Advantageously, when the SSE comprises two or more non-aqueous solvents, at least one of the plurality of non-aqueous solvents is an ionic liquid having FSI as anion. Advantageously, the other solvents, i.e. the solvents not being an ionic liquid having an FSI anion, can be as described hereinabove. Non-limiting examples include acetonitrile, dimethoxyethane (also known as 1,2-dimethoxyethane), propylene carbonate, ethylene carbonate, tetrahydrofuran, diethyl carbonate, γ-butyrolactone, 2-methyltetrahydrofuran, 1-3 dioxolane, tetramethyl sulfone, dimethylsulfone, and ionic liquids having an anion other than FSI.

Non-limiting examples of anions of ionic liquids having an anion other than FSI include TFSI, DCA, ClO₄, PF₆, DFBOP, DFOB, BF₄, FTFSI, AlCl₄, AsF₆, and CF₃SO₃.

Non-limiting examples of cations of ionic liquids suitable as non-aqueous solvent, i.e. having FSI as anion or another anion as described hereinabove, according to the second embodiment include 1-butyl-1-methylpyrrolidinium, N-butyl-N-methylpyrrolidinium, 1-propyl-1-methylpyrrolidinium, N-propyl-N- N-methylpyrrolidinium, and 1-ethyl-1-methylpyrrolidinium.

Non-limiting examples of ionic liquids having an FSI anion are 1-butyl-1-methylpyrrolidinium FSI, N-butyl-N-methylpyrrolidinium FSI, 1-propyl-1-methylpyrrolidinium FSI, N-propyl-N- N-methylpyrrolidinium FSI, and 1-ethyl-1-methylpyrrolidinium FSI.

The SSE further comprises one or more metal salts. Advantageously, the cation of the metal salt(s) is as described hereinabove. Non-limiting examples of suitable anions of the metal salt(s) include TFSI, DCA, ClO₄, PF₆, DFBOP, DFOB, BF₄, FTFSI, AlCl₄, AsF₆, and CF₃SO₃.

According to a third embodiment, the sources of FSI anions in the solid state electrolyte are a metal salt and a non-aqueous solvent. Advantageously, the non-aqueous solvent comprising FSI anions is an ionic liquid.

Advantageously, the metal salt as source of FSI anions is as described hereinabove for the first embodiment. The SSE can comprise one or more further metal salts, e.g. a second, third, or fourth metal salt. When the SSE comprises a plurality of metal salts, e.g. at least two metal salts, they are advantageously as described hereinabove for the first embodiment.

Advantageously, the non-aqueous solvent as source of FSI anions is as described hereinabove for the second embodiment. The SSE can comprise one or more further non-aqueous solvents. When the SSE comprises a plurality of non-aqueous solvents, e.g. at least two non-aqueous solvents, they are advantageously as described hereinabove for the second embodiment.

### Examples

### Example 1

A first liquid precursor was prepared by adding 11.22 g LiFSI as metal salt and 2.66 g AlCl₃ in 8.00 g acetonitrile (ACN). The liquid precursor was then kept for 24 hours at a temperature of 20 °C, so that a solid state electrolyte (SSE) was obtained.

The SSE comprised 51.28 % by weight LiFSI, 12.16 % by weight AlCl₃ and 36.56 % by weight ACN, based on the total weight of the SSE.

The composition was analysed by Raman spectroscopy for the presence of AlCl₃ and/or one or more polymeric forms thereof. In other to minimize the humidity absorption by the SSE sample, the SSE was deposited on a silicon wafer and put inside a closed plastic pouch.

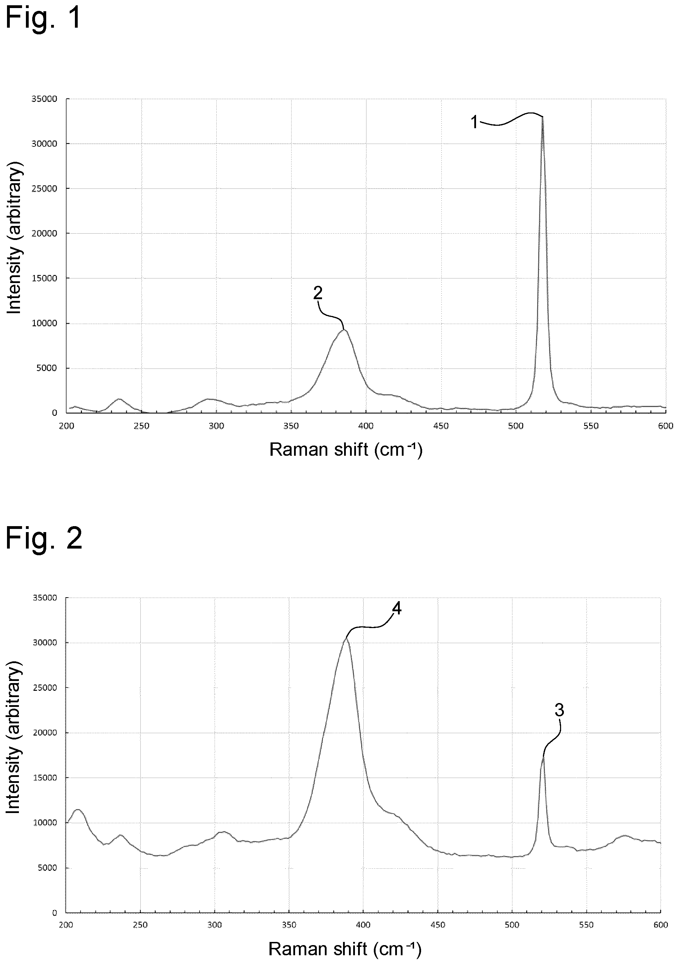

The Raman spectrum was obtained using a green laser having a wavelength 532 nm. Figure 1 shows the obtained spectrum. The peak 1 at 517.7 cm⁻¹ comes from the silicon wafer. The mean feature of the spectrum is the broad peak 2 at 385 cm⁻¹. This peak 2 is attributed to a polymeric form of AlCl₃, noted as (AlCl₃)ₘ, also referred to as a "higher AlCl₃ polymer". It is the only prominent feature in the spectrum of the solid state electrolyte. This however does not exclude the possibility of the presence of a (limited) amount of AlCl₃ in the SSE.

### Example 2

A second liquid precursor was prepared by adding 5.62 g LiFSI as metal salt and 2.00 g AlCl₃ in 4.00 g acetonitrile (ACN). The liquid precursor was then kept for 24 hours at a temperature of 20 °C, so that a (second) solid state electrolyte (SSE) was obtained.

The SSE comprised 48.38 % by weight LiFSI, 17.21 % by weight AlCl₃ and 34.41 % by weight ACN, based on the total weight of the SSE.

The composition was analysed by Raman spectroscopy for the presence of AlCl₃ and/or one or more polymeric forms thereof. In other to minimize the humidity absorption by the SSE sample, the SSE was deposited on a silicon wafer and put inside a closed plastic pouch.

The Raman spectrum was obtained using a green laser having a wavelength 532 nm. Figure 2 shows the obtained spectrum. The peak 3 at 517.7 cm⁻¹ comes from the silicon wafer. The mean feature of the spectrum is the broad peak 4 at 385 cm⁻¹. This peak 4 is attributed to a polymeric form of AlCl₃, noted as (AlCl₃)ₘ, and is the only prominent feature in the spectrum of the solid state electrolyte. This however does not exclude the possibility of the presence of a (limited) amount of AlCl₃ in the SSE.

Compared to the liquid precursor used to obtain the SSE of Example 1, the liquid precursor used to obtain the SSE of Example 2 has a higher amount (in % by weight) of AlCl₃, which results in peak 4 having a higher intensity than peak 2.

### Example 3

A third liquid precursor was prepared by adding 9.35 g LiFSI as metal salt and 2.22 g AlCl₃ in 9.00 g dimethoxyethane (DME). The obtained suspension was then heated to 60 °C for 10 minutes to obtain homogeneous mixing of the components, thereby obtaining the liquid precursors. The liquid precursor was then kept for 24 hours at a temperature of 20 °C, so that a (third) solid state electrolyte (SSE) was obtained.

The SSE comprised 45.46 % by weight LiFSI, 10.78 % by weight AlCl₃ and 43.76 % by weight DME, based on the total weight of the SSE.

The composition was analysed by Raman spectroscopy for the presence of AlCl₃ and/or one or more polymeric forms thereof. In other to minimize the humidity absorption by the SSE sample, the SSE was deposited on a silicon wafer and put inside a closed plastic pouch.

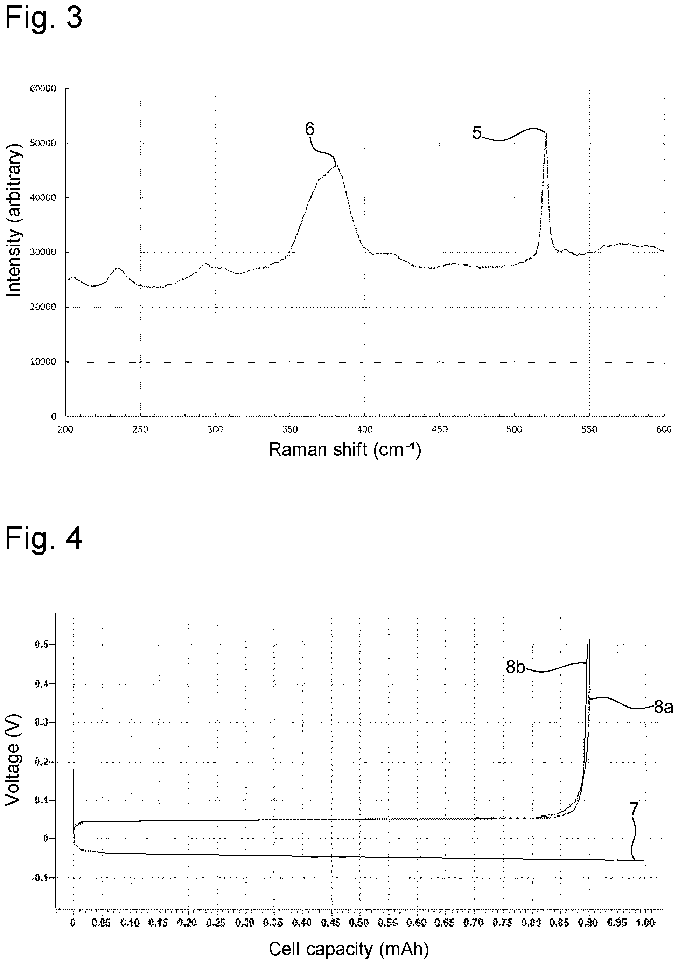

The Raman spectrum was obtained using a green laser having a wavelength 532 nm. Figure 3 shows the obtained spectrum. The peak 5 at 517.7 cm⁻¹ comes from the silicon wafer. The mean feature of the spectrum is the broad peak 6 at 385 cm⁻¹. This peak 6 is attributed to a polymeric form of AlCl₃, and is the only prominent feature in the spectrum of the solid state electrolyte. This however does not exclude the possibility of the presence of a (limited) amount of AlCl₃ in the SSE.

Example 3 shows that the presence of AlCl₃ and/or one or more polymeric forms thereof in the SSE is not related to the use of ACN as solvent (which was used in Examples 1 and 2).

### Example 4

Two anode-free lithium metal battery cells were prepared. The first battery cell was prepared with the liquid precursor, which was not yet solidified, as electrolyte. The second battery cell was prepared with the same electrolyte composition, but after it was solidified for 24 hours at 20 °C. Hence, the second battery cell was prepared with a SSE according to the invention.

The liquid precursor was prepared by adding 12.00 g LiFSI as metal salt, 5.00 g AlCl₃, 0.40 g LiCI in 11.00 g ACN and 1.00 g toluene (non-aqueous solvents). In other words, both the liquid precursor and the SSE precursor (i.e. the solidified liquid precursor) comprised 40.82 % by weight LiFSI, 17.01 % by weight AlCl₃, 1.36 % by weight LiCI, 37.41 % by weight ACN, and 3.40 % by weight toluene, based on the total weight of the electrolyte.

A 25 µm thick lithium foil laminated on a copper foil was used as the cathode and the cathode current collector. A copper foil was used as the anode current collector. A three-layer ceramic loaded separator, comprising one layer of polyethylene sandwiched between two layers of polyvinylidene fluoride, was provided between the cathode and the anode current collector.

The anode-free lithium metal battery cells were then discharged for one hour and charged to 0.5 V with 1 mA, or 0.15 mA/cm² with respect to the lithium surface. Next, the battery cells were discharged and charged repeatedly, up to 50 times (or 50 charge/discharge cycles). The Coulombic efficiency was measured for both battery cells after 1, 2, 3, 4, 5 and 50 cycles. The results are presented in Table 1.

**Table 1: Coulombic efficiencies for anode-free Li metal battery cells**

| | **Coulombic efficiency** | |
|---|---|---|
| **Cycle number** | **Battery cell with liquid precursor as electrolyte** | **Battery cell with solid state electrolyte** |
| 1 | 17.2 % | 38.2 % |
| 2 | 4.4 % | 61.5 % |
| 3 | 7.6 % | 65.7 % |
| 4 | 7.9 % | 67.6 % |
| 5 | 9.0 % | 70.6 % |
| 50 | / | 92.7 % |

From table 1, it is clear that the battery cell with the SSE of the present disclosure shows good deposition of lithium on the copper foil anode current collector, leading to a Coulombic efficiency after 1 cycle that is already more than twice the highest Coulombic efficiency measured for the battery cell with the same electrolyte composition but in solid form (38.2 % vs. 17.2 %).

Further, the Coulombic efficiency for the battery cell with the inventive SSE increases with each charging/discharging cycle, reaching 92.7 % after 50 cycles. The Coulombic efficiency of the battery cell with the liquid electrolyte however, sees an initial drop of Coulombic efficiency after cycle 2, then again a slight increase, but the values remain very low and well below the values obtained with the aode-free lithium metal battery cell comprising the solid state electrolyte.

### Example 5

In order to evaluate the performance of an anode-free lithium metal battery cell comprising the inventive SSE with an anode-free lithium metal battery cell comprising a reference electrolyte, two anode-free electrochemical cells were prepared. The first electrochemical cell was prepared with a SSE according to the invention, and the second electrochemical cell was prepared with a reference liquid electrolyte.

A liquid precursor was prepared by adding 12.65 g LiFSI as a first metal salt, 19.42 g LiTFSI as a second metal salt, 3.00 g AlCl₃, and 2.02 g HFE as surfactant in 20.25 g DME as non-aqueous solvent.

The reference liquid electrolyte comprised 40.00 % by weight LiFSI, 30.00 % by weight HFE as surfactant, and 30.00 % by weight DME, based on the total weight of the liquid electrolyte. Hence, the reference liquid electrolyte did not comprise AlCl₃.

The electrochemical cells were prepared as bi-stack pouch cells comprising a copper foil sandwiched between 2 lithium foils as individual electrodes. A three-layer ceramic loaded separator, comprising one layer of polyethylene sandwiched between two layers of polyvinylidene fluoride, was provided between the cathode and the anode current collectors.

The liquid precursor was provided within the battery cell in liquid state and was then kept for 24 hours at a temperature of 60 °C, so that a solid state electrolyte (SSE) was obtained, comprising 22.07 % by weight LiFSI, 33.87 % by weight LiTFSI, 5.23 % by weight AlCl₃, 3.53 % by weight HFE, and 35.31 % by weight DME, based on the total weight of the SSE.

In-situ lithium deposition on the Cu anode current collector was performed for 1 hour at 1 mA galvanostatically (0.066 mA/cm² with respect to the Cu surface).

The voltage (or the potential vs. Li/Li⁺) of the battery cells in function of the cell capacity was then measured at room temperature during charging and discharging of the battery cells.

Figure 4 shows the results for the lithium deposition and dissolution for the electrochemical cell with Cu foil and Li foil as individual electrodes and SSE of the invention. The measured voltage is shown as function of the cell capacity for the first dissolution of the deposited lithium (8a), the second lithium deposition on the Cu foil (7) and the second dissolution (8b) of the deposited lithium.

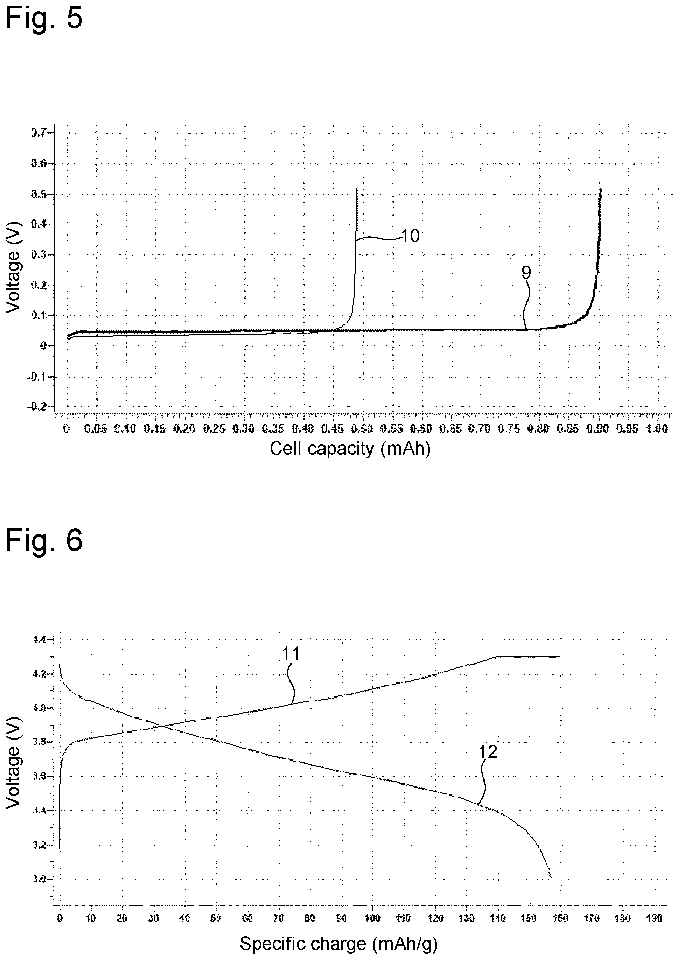

Figure 5 shows the results for the first lithium dissolution of the deposited lithium for the reference electrochemical cell (liquid electrolyte; line 10) and for the electrochemical cell with the inventive SSE (line 9). The electrochemical cells had Cu foil and Li foil as individual electrodes. The capacity ratio of the curves 9, 10 represents the Coulombic efficiency of the first cycle. A capacity of 1 mAh corresponds to a Coulombic efficiency of 100 %. It is clear from Figure 5 that the reference battery cell has a Coulombic efficiency of only 48 %, whereas the battery cell with the inventive SSE has a Coulombic efficiency of 90 %.

### Example 6

A further anode-free battery cell was prepared with the SSE of Example 5. Again the liquid precursor was provided within the battery cell, and kept at 60 °C for 24h to obtain the SSE.

The anode-free battery cell was prepared as bi-stack pouch cell comprising two copper foils as anode current collectors sandwiching a cathode comprising NCA as active material. A three-layer ceramic loaded separator, comprising one layer of polyethylene sandwiched between two layers of polyvinylidene fluoride, was provided between the cathode and the anode current collector.

The battery cell was then charged and discharged at 5 mA galvanostatically (0.39 mA/cm² with respect to the cathode surface) and the cell potential was measured at room temperature as function of the specific charge per gram of active material. Figure 6 shows the results, wherein line 11 represents the charging curve and line 12 the discharging curve. From Figure 6 it is clear that 158 mAh/g of the expected 170 mAh/g are usable. In other words, only 12 mAh/g are lost in the initial in-situ lithium deposition.

### Nomenclature

- 1.: Peak of silicon wafer in Raman spectrum
- 2.: Peak of a polymeric form of AlCl₃ in Raman spectrum
- 3.: Peak of silicon wafer in Raman spectrum
- 4.: Peak of a polymeric form of AlCl₃ in Raman spectrum
- 5.: Peak of silicon wafer in Raman spectrum
- 6.: Peak of a polymeric form of AlCl₃ in Raman spectrum
- 7.: Curve of first lithium deposition
- 8a.: Curve of first lithium dissolution
- 8b.: Curve of lithium dissolution
- 9.: Curve of lithium dissolution
- 10.: Curve of lithium dissolution
- 11.: Charging curve
- 12.: Discharging curve

## Claims

1. Solid state electrolyte for an anode-free metal battery cell, wherein the metal is an alkali metal, an alkaline earth metal or a metal of Group Ib, Group IIb, or Group IIIa of the periodic table, the solid state electrolyte comprising a non-aqueous solvent and a metal salt of the alkali metal, the alkaline earth metal or the metal of Group Ib, Group IIb, or Group IIIa of the periodic table, **characterized in that** the solid state electrolyte further comprises an aluminium-based halogenated compound AlXₙ and/or a polymeric form thereof, wherein X is a halogen atom and n is between 1 and 6, and a bis(fluorosulfonyl)imide (FSI) anion.

2. Solid state electrolyte according to claim 1, wherein X is chloride and n is 3, and the aluminium-based halogenated compound is AlCl₃.

3. Solid state electrolyte according to any one of the preceding claims, wherein the metal is lithium, sodium, magnesium, aluminium, zinc or silver.

4. Solid state electrolyte according to any one of the preceding claims, wherein the molar ratio of the metal salt and the aluminium-based halogenated compound and/or a polymeric form thereof is between 1:2 and 50:1.

5. Solid state electrolyte according to any one of the preceding claims, wherein the metal salt comprises an anion, wherein the anion of the metal salt is FSI.

6. Solid state electrolyte according to claim 5, further comprising at least one further metal salt comprising an anion, wherein the anion of the at least one further metal salt is FSI, bis(trifluoromethane)sulfonimide (TFSI), dicyanamide (DCA), perchlorate (ClO₄), difluorobis(oxalato) borate (DFOB), or hexafluorophosphate (PF₆).

7. Solid state electrolyte according to any one of claims 5 to 6, wherein the non-aqueous solvent is selected from the group consisting of nitrile, ether, ester, carbonate, sulfone, amide, and ionic liquids.

8. Solid state electrolyte according to claim 7, wherein the non-aqueous solvent is acetonitrile, dimethoxyethane, or an ionic liquid.

9. Solid state electrolyte according to any one of the preceding claims, wherein the non-aqueous solvent is an ionic liquid comprising an anion, wherein the anion of the ionic liquid is FSI.

10. Method of producing a solid state electrolyte for an anode-free metal battery cell, wherein the metal is an alkali metal, an alkaline earth metal or a metal of Group Ib, Group IIb, or Group IIIa of the periodic table, comprising:
- Adding an aluminium-based halogenated compound AlXₙ and a metal salt to a non-aqueous solvent, thereby obtaining a liquid precursor;
- Exposing the liquid precursor to a temperature between 20 °C and 80 °C for a sufficient duration to solidify the liquid precursor, thereby obtaining the solid state electrolyte,
wherein X is a halogen atom and n is between 1 and 6, wherein the metal salt is a metal salt of the alkali metal, the alkaline earth metal or the metal of Group Ib, Group IIb, or Group IIIa of the periodic table, and wherein the liquid precursor comprises a bis(fluorosulfonyl)imide (FSI) anion.

11. Method of producing a solid state electrolyte according to claim 10, wherein the concentration of the metal salt in the liquid precursor is between 0.5 and 6 M.

12. Method of producing a solid state electrolyte according to any one of claims 10 to 11, wherein the aluminium-based halogenated compound AlXₙ and/or the metal salt are at least partially dissolved in the non-aqueous solvent.

13. Method of producing a solid state electrolyte according to any one of claims 10 to 12, wherein X is chloride and n is 3, and the aluminium-based halogenated compound is AlCl₃.

14. Method of producing a solid state electrolyte according to any one of claims 10 to 13, wherein the metal salt comprises an anion, wherein the anion of the metal salt is FSI, and/or wherein the non-aqueous solvent is an ionic liquid comprising an anion, wherein the anion of the ionic liquid is FSI.

15. Use of the solid state electrolyte according to any one of claims 1 to 9, for the in situ deposition of a layer of the metal in an anode-free metal battery cell.
